# EUROPEAN PATENT SPECIFICATION

(11) **EP 2 933 363 B1**
(45) Date of publication and mention of the grant of the patent: **30.01.2019**
(21) Application number: 14001388.9
(22) Date of filing: 16.04.2014
(51) Int. Cl.: D03D 47/30, F16K 31/06

(54) **Air jet weaving machine comprising electromagnetic valve**
Luftdüsenwebmaschine umfassend elektromagnetisches Ventil
Machine à tisser à jet d'air comprenant une valve électromagnétique

(43) Date of publication of application: 21.10.2015
(73) Proprietor: IRO Aktiebolag, 52322 Ulricehamn (SE)
(72) Inventor: Josefsson, Pär, SE-507 65 Borås (SE); Rundberg, Tomas, SE-434 94 Valda (SE); Johansson, Per-Ove, SE-142 64 Trångsund (SE)
(74) Representative: Sandström, Staffan Sven

(56) References cited:
- DE-U1- 29 917 872
- US-A- 5 474 100
- US-A- 5 593 134
- US-A1- 2010 163 768
- US-B1- 6 220 569
- US-B2- 6 796 338

## Description

### TECHNICAL FIELD

The present disclosure relates to a weaving machine. In particular the present disclosure relates to an air-jet weaving machine.

### BACKGROUND

Various kinds of weaving machines exist. One type of weaving machine is a so-called air jet weaving machine. In an air-jet weaving machine, a jet of air is used to pick the weft yarn. The air- jet is formed by opening and closing a valve / valves to let a compressed air stream flow through nozzles. The air is blown through the nozzles onto the weft yarn thereby transporting the weft yarn from one end, the insertion end, of the shed to the other, the arrival end of the shed. To ensure that the weft yarn will reach all the way to the arrival end of the shed, there is typically provided a relatively large number of air- jet nozzles. First of all, one or more main nozzles are provided in order to start and accelerate the weft yarn at a correct time. Second, in order to maintain the flight and the speed of the weft yarn all the way to the arrival end of the shed, so-called relay nozzles or auxiliary nozzles are usually provided. An air-jet weaving machine allows the weft yarn to be picked at a high rate. A rate of over 1000 picks/minute is typically possible in an air-jet weaving machine of today.

One weakness in modern air-jet weaving machines emanates from the, especially in non-narrow weaving machines, necessary large number of nozzles provided, which in turn requires a large amount of compressed air to be generated. The compressed air is costly in terms of electrical energy required for powering the air-compressing equipment.

In modern air-jet weaving machines, therefore, it is vital to reduce as much as possible any unnecessary consumption, escape or leakage of compressed-air, which will always represent a certain loss of useful energy in the compressed-air supply system to the nozzles.

One example of a modern air-jet weaving machine is known from US patent No. 6,796,338.

Another example is known from EP 0 212 725, which proposes that the loss of useful energy can be reduced by positioning the respective valves, controlling the opening and closing of the air-jet stream from a co-operating nozzle, close to the nozzle in question.

US patent No. 4,848, 416 goes even one step further in reducing the loss of useful energy by proposing a structural combination of each respective valve and nozzle into one single unit.

So, generally, there is a constant, urgent desire to further improve the performance and rate of efficiency in weaving machines. Hence, there is a need for an even further improved air-jet weaving machine.

### SUMMARY

It is an object of the present invention to provide an even further improved air-jet weaving machine.

This object and/or others are obtained by the weaving machine and the air supply arrangement as set out in the appended claims.

As has been realized by the inventors, when operating an air-jet weaving machine a significant amount of energy is used to generate compressed air. As mentioned above, unfortunately, a portion of the generated compressed air cannot be efficiently used due to various types of compressed air losses within the pneumatic system. Such compressed air losses can be significant. The energy losses due to compressed air not being efficiently used within the system can therefore end up to be costly.

By providing a compressed air supply arrangement with an improved response time, and which may also have a smaller repetition variance in its response time, an improved efficient use of energy can be achieved in an air-jet weaving machine. The air supply arrangement can comprise a compressed air supply feeding the nozzle(s). The compressed air is fed to the nozzle(s) via a valve. The valve is an electromagnetic valve having a core that can be magnetized using a coil fed with an excitation current. The valve further comprises a valve member. The member is formed in particular by at least three plates stacked on top of each other. The member is, at least partly, made of a magnetic material. The valve member is located in a space interconnecting an inlet and an outlet of the valve. The valve member can move in the space between two positions; a first position when there is no excitation current in the coil, and a second position when there is an excitation current in the coil. In one of the two positions the valve member is forced to close the valve and in the other position the valve member is forced to open a channel in the space between the inlet and outlet of the valve thereby opening the valve.

Because the valve member can be made small, and with a relatively low weight, the opening and closing of the valve can be made with a short response time. Also, the timing variance between one opening/closing to the next can be small. Since the response time is short the valve can be opened with improved timing precision compared to existing supply systems for air nozzles in air jet weaving machines. As a result, the amount of compressed air can be reduced due to the fact that the time window when the valve is open can be reduced. Hence, the reduced response time can be utilized to significantly reduce the loss of compressed air. Thus, as has been realized by the inventors, it is imperative that the nozzle provides compressed air at a particular time. Otherwise there is a risk that the weft yarn will not reach the arrival end of the shed at all or reaches the arrival end of the shed at an incorrect time. In existing compressed air supply systems this can typically be avoided by opening the valve controlling the compressed air flow through the nozzle some time before the nozzle has to be in an operational open state. However, any excess time the valve is open, i.e. the time from when the valve is opened until the nozzle needs to provide an air-jet stream onto the weft yarn, will cause additional loss of efficiently useful compressed air. Hence, if the time window when the valve is opened "in advance" before a full air jet stream is required can be reduced, energy and cost can be saved.

In accordance with one embodiment an air supply arrangement for supply of compressed air to an air jet nozzle in an air jet weaving machine is provided. The air supply arrangement comprises a compressed air supply unit adapted to supply compressed air to the air jet nozzle. The air supply arrangement further comprises a valve interconnected between the air supply unit and the air jet nozzle. The valve comprises a core that can be magnetized using a coil fed with an excitation current. The valve further comprises a valve member being made at least partly of a magnetic material. In particular the valve member is formed by at least three stacked plates that can provide/build up a return spring force when the valve member is attracted by the core. The plates are at least partially displaceable in relation to each other in at least one direction and have a thickness of 0.02 - 0.5 mm. The valve member is located in a space interconnecting an inlet and outlet of the valve, wherein the valve member can move in the space between two positions; a first position when there is no excitation current in the coil, and a second position where there is an excitation current in the coil and where the valve member is attracted by the core. In one of the two positions the valve member is forced to close and in the other position to open a compressed air flow passage formed in the space between the inlet and outlet of the valve and leading further to the air-jet nozzle.

Using a compressed air supply arrangement as described herein, the opening and closing of the valve can be made extremely precisely and with a very short response time. This is at least partly due to the small mass that needs to be moved when opening and closing the valve of the compressed air supply system for the air-jet weaving machine as described herein.

Additionally, the timing variance between one opening/closing to the next will be very small in the compressed air supply system for the air-jet weaving machine as described herein.

The extremely high precision and short response time and the very small timing variance of the compressed air-nozzle and valve arrangement for an air-jet weaving machine as described herein will lead to a considerably reduced loss of efficiently useful compressed air and to a corresponding considerable amount of cost saving for the operation of the weaving machine.

The invention also extends to an air-jet weaving machine comprising a compressed air supply system arrangement in accordance with the above.

### BRIEF DESCRIPTION OF THE DRAWINGS

The present invention will now be described in more detail by way of non-limiting examples and with reference to the accompanying drawings, in which:
- Fig. 1 illustrates an air-jet weaving machine,
- Fig. 2 illustrates a compressed air nozzle arrangement,
- Figs. 3 - 7 illustrate different valves and subparts thereof,
- Fig. 8 illustrates a controller.

### DETAILED DESCRIPTION

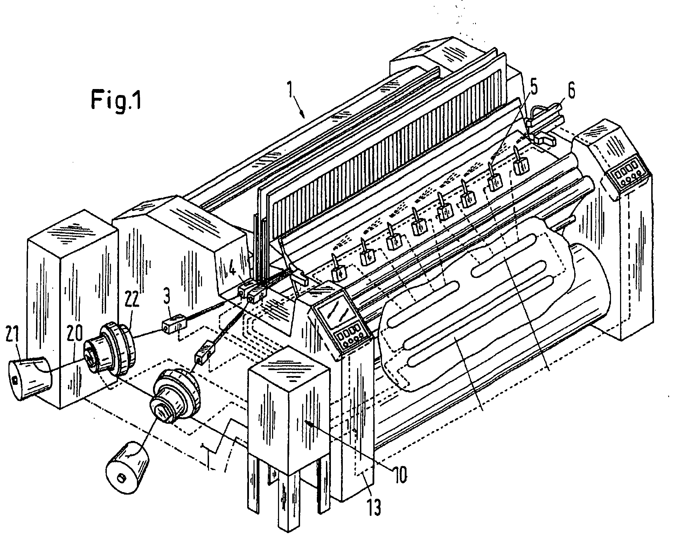

In Fig. 1 a conventional air-jet weaving machine 1 is illustrated. The air jet weaving machine can typically comprise weft yarn 20 provided on one or more yarn bobbins 21. In the air-jet weaving machine of Fig. 1, the weft yarn 20 enters a weft yarn storing device/prewinder 22. From the prewinder 22 the weft yarn is picked by a main nozzle 4. The main nozzle 4 can be preceded by one or more pre-nozzles 3. There can be multiple pre-nozzles and main nozzles 4. The nozzles 3 and 4 are fed with compressed air from an air supply unit 10 via lines 13. Further, in order to transport the weft yarn 20 all the way through the shed of the air-jet weaving machine, relay nozzles 5 can be provided. The relay-nozzles are also fed with compressed air from the compressed air supply unit 10. In addition, one or more stretch nozzles 6 can be provided to ensure that the weft yarn remains stretched until the shed has been closed after the weft yarn has reached the arrival end of the shed, (i.e. the opposite side of the shed as seen from the main nozzle(s)). The stretch nozzle(s) are also supplied with compressed air from the air supply unit 10. Such an air jet weaving machine is for example described in the US patent No. 6,796,338.

In order to reduce energy consumption in an air-jet weaving machine, the air-jet weaving machine can be provided with a compressed air supply arrangement as described below.

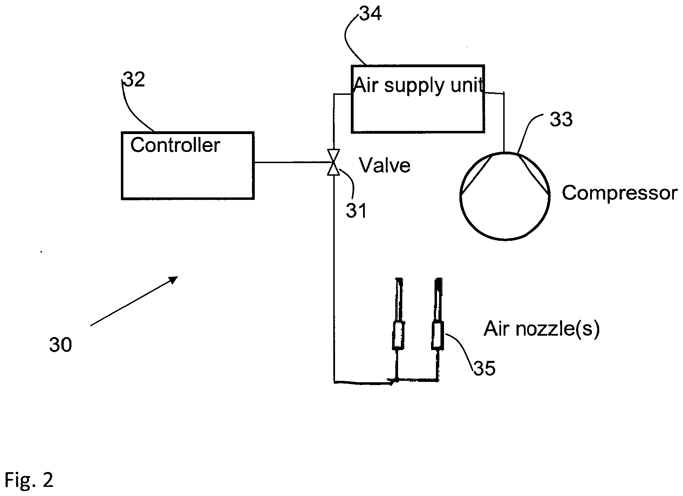

In Fig. 2, a compressed air supply arrangement 30 for an air-jet weaving machine is shown. The air supply arrangement comprises a compressor 33 for generating compressed air. The compressed air is stored in an air supply unit 34. The air supply unit 34 can be the air supply unit 10 as shown in Fig. 1. Further the air supply arrangement 30 comprises a valve 31 fed with compressed air from the air supply unit 10. The valve 31 is adapted to have a very short response time. The valve 31 is described in more detail below. The valve 31 is controlled by a controller 32. The output from the valve 31 is connected to one or more air nozzles 35. The air nozzle 35 can be any air nozzle in an air-jet weaving machine. In particular the nozzle 35 can be any of the nozzles 3, 4, 5, 6 as set out above in Fig. 1. It can be advantageous to locate the valve close, within a few centimeters, to the nozzle. In some embodiments the nozzle can even be collocated or integrated with the valve.

In accordance with some embodiments the same valve is connected to more than one air nozzle 35. For example when the nozzle 35 is a relay nozzle, the one and the same valve can be connected to a plurality of relay nozzles. In some other embodiments a valve controls the compressed air flow to a single nozzle.

In order to improve the performance of the air supply arrangement a valve with a very short response time, and which may also have a very small variance in the response time from one opening/closing to the next can be used. Hereby an improved use of energy can be achieved in an air-jet weaving machine.

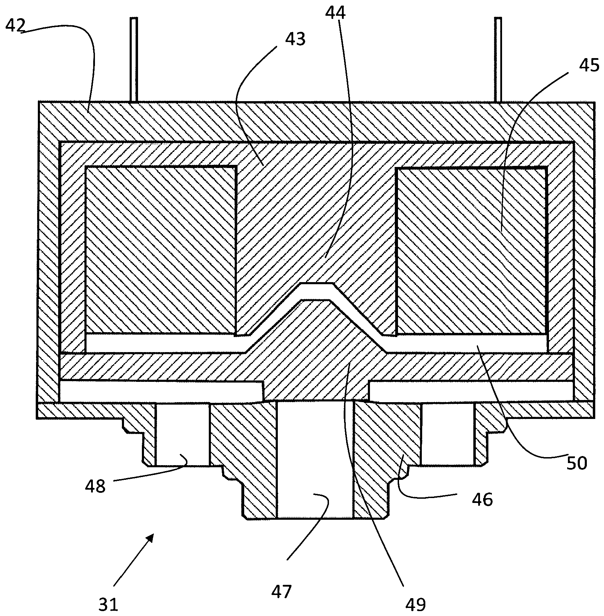

In Fig. 3, an axial section of an embodiment of an electromechanical valve 31 for control of compressed air supply to an air-jet nozzle is shown.

The valve 31 comprises a housing 42 of non-magnetic material, e.g. aluminium. Inside the housing 42 a core 43 of an electromagnetic material is located. The core 43 has a centrally extending portion 44 that is surrounded by a coil 45. In one embodiment the core 43 is generally cup-shaped. In one embodiment the core 43 can be E-shaped. Other shapes are possible.

In one embodiment, the centrally located portion 44 extends to the rim of the cup shaped electromagnetic core 43. It is however to be understood that the portion 44 may be shorter or longer than the height of the wall of the core.

The coil 45 is supplied with excitation current from a current source. In particular controller 32 can be used to control the excitation current.

Preferably, the coil 45 has low inductance and the current source to be connected to the terminals has current generator characteristics.

A valve seat 46, also of non-magnetic material, e.g. aluminium, is attached, e.g. by means of screws (not shown), to the housing 42 with a space to the core 43.

The valve 31 further has an outlet port 47. In one embodiment, the valve seat 46 has a centrally located outlet port 47. In accordance with another embodiment more than one outlet port 47 is provided.

The valve 31 further comprises an inlet port 48. In accordance with one embodiment the valve 31 comprises two inlet ports 48 at a radial distance from the outlet port 47. The number of inlet ports can vary. At least one inlet port 48 is provided and more may be used. The outlet port 47 and the inlet ports 48 are in communication via a space in the valve 31. In accordance with one embodiment the space is located between the valve seat 46 and the core 43.

In accordance with some embodiments, a valve member 49 comprising magnetic material is arranged in the valve. The valve member is formed by at least three plates. In particular the plates can be flexible plates stacked on top of each other. The plates are, at least partly, made of a magnetic material. The valve member is located in a space interconnecting an inlet and outlet of the valve. The valve member can move in the space between two positions; a first position when there is no excitation current in the coil, and a second position when there is an excitation current in the coil. In one of the two positions the valve member is forced to close the opening of the valve and in the other position the valve member is forced to open a channel in the space between the inlet and outlet of the valve thereby opening the valve.

In accordance with one embodiment the valve member 49 comprises at least three flexible plates of an electromagnetic material, together forming a blade spring. When excitation current is supplied to the coil 45, the valve member 49 cooperates with, i.e. is attracted by, core 43 to open/close the valve. When no excitation current is supplied, the valve member 49 returns to an initial position by its inherent spring force, i.e. the spring force built up when it is being attracted by the core 43.

The valve member 49 in some embodiments, preferably, has a stroke ≤ 2 mm between the open and closed positions to keep dimension down. Also the weight of the valve member can be small, in the order of a few grams. In some embodiments the weight is in the range of 2 - 15 grams. In some embodiments the weight of the valve member 49 is less than 10 grams, such as in the range of 3 - 7 grams.

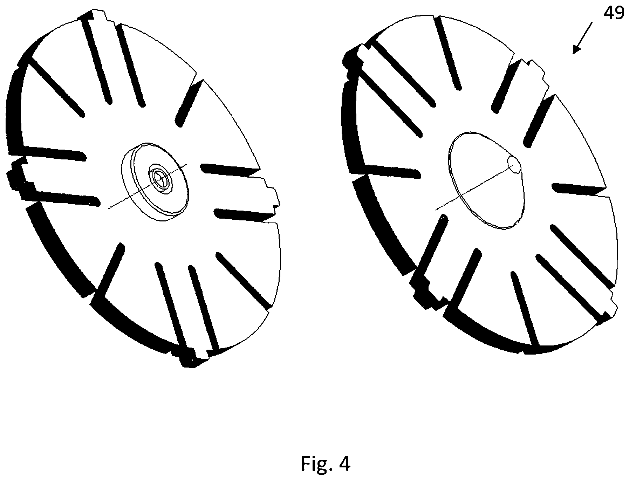

In Fig. 4 a perspective view from both sides of an embodiment of a valve member 49 is shown. The valve member is formed as a blade spring that enables the valve member to return to its seat when the coil is not excited by any electricity.

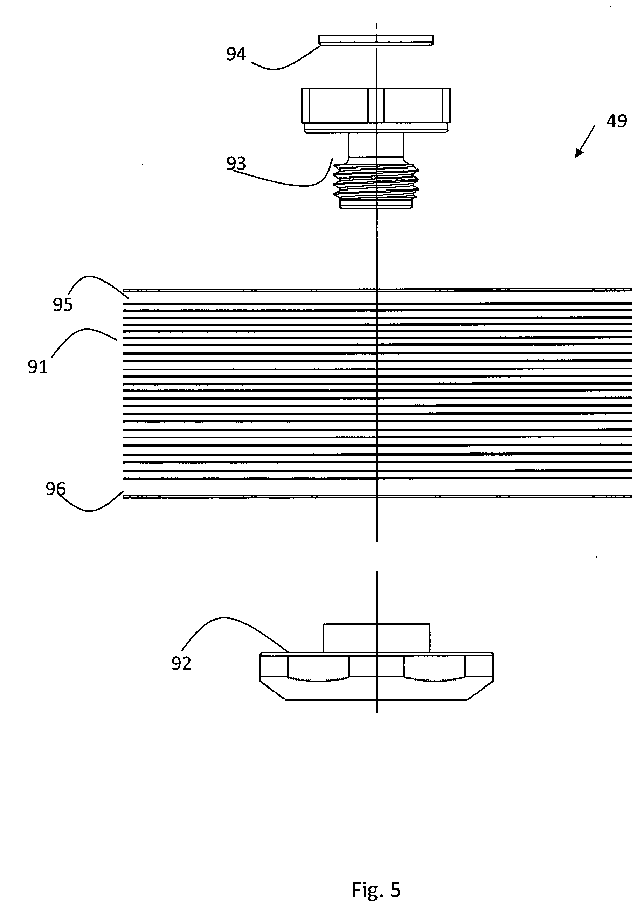

In Fig. 5 an exploded view from the side of another embodiment of a valve member 49 is shown. The valve member 49 is formed by at least three layers of flexible plates 91 of an electromagnetic material. The plates 91 that are stacked on top of each other form a blade spring that enables the valve member 49 to return to its seat when the core is not excited by any electricity. Each plate 91 is formed by a thin sheet of soft magnetic material, e.g. of a suitable type of stainless steel. The valve member 49 further comprises a bolted joint formed by a nut 92 and a bolt 93. The bolt 93 can further have a sealing 94 formed by an elastic material attached thereto to enhance the seal against the valve seat when the valve is closed. Also one or both of the top and bottom plates of the multiple stacked plates 91, denoted 95 and 96 in Fig. 5, can be thicker and/ or made of another material, even of non-magnetic material, than the other plates 91. Thus, in accordance with some embodiments the plate facing the outlet port is designed differently from the other plates in the stack of plates 91. In particular this plate can be thicker or of another material, even of non-magnetic material, than the other plates of the valve member. This is advantageous in that the plate facing the outlet port thereby will endure more mechanical stress than the other plates and by letting the plate facing the outlet port have other properties, e.g. higher wear resistance, than the other plates, the lifetime of the valve member 49 and of the valve can be increased, especially if one of or both outer plates, in a further embodiment, would be arranged easily replaceable as an in-expensive spare part item.

Each plate 91 of the valve member 49 can have a generally circular perimeter and the thickness of a plate 91 is small in relation to the diameter of the plate. Typical dimensions for a plate in the valve member can be between 0.02 mm - 0.5 mm thick. In accordance with some embodiments the diameter of the valve member 49 can be in the range of 10 mm - 50 mm.

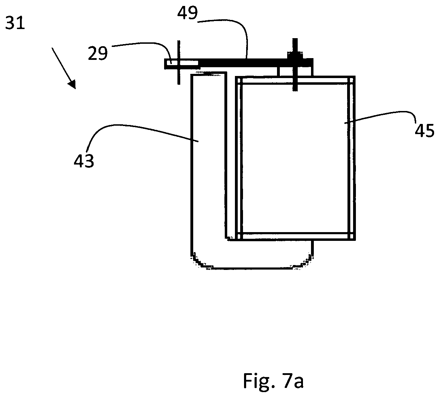

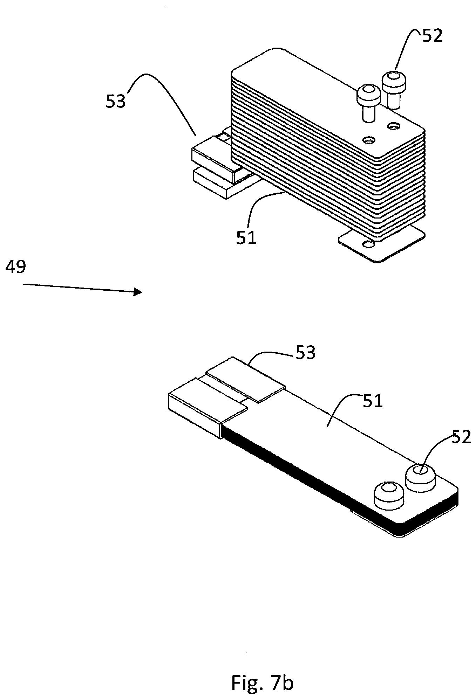

Further, the number of stacked thin plates 91 forming the valve member can also vary. In some applications the number of thin plates can range from 3 - 50. In other applications the number of plates is in the range from 3 - 40, in particular in the range from 5 - 20. In some embodiments at least two plates cooperating with each other are essentially identical. The at least two essentially identical plates can be supplemented with outer plates having other dimensions or made of other materials as described herein. In some embodiments the shape of the plate is another than a generally round/circular shape. For example the periphery of the plates can have a generally rectangular shape, such as in the embodiment described below in conjunction with Figs. 7a and 7b.

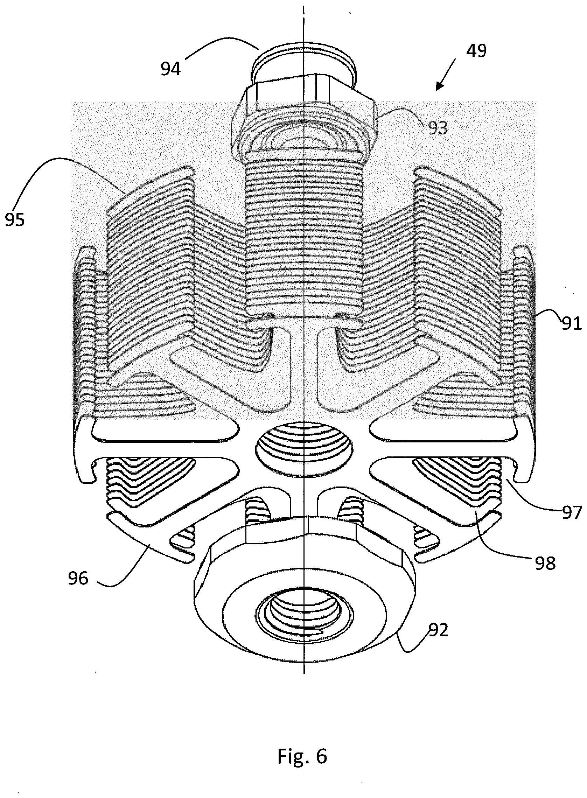

Further, as is shown in Fig. 6 a plate, in particular each plate, can be provided with radially oriented slits 97. The slits can in accordance with one embodiment have a width that increases in a radial direction out towards the perimeter edge of the plates. The slits 97 can in accordance with one embodiment extend all the way to the periphery of the plates. In accordance with some embodiments the slits are shaped such that the width of the slits decreases at the periphery of the plates. This will form a valve member having a number of T-shaped tongues extending from a central section forming an essentially circular valve member. In particular the outer plates can have the T-shaped tongues. The T-shaped outer tongues will provide good spring characteristics while keeping the wear surface large. Further, in accordance with some embodiments the top and/or bottom plate 95, 96 of the valve member can have slits 98 that are shaped different from the slits of the other plates in the valve member. In particular the slits 98 of an outer plate in the valve member 49 can be larger i.e. having a larger area cut out from the plate, than the corresponding slits 97 of the other plates 91.The exact shape of the slits can vary depending on the application. The design of the slits can be used to choose the desired spring characteristics of the valve member. Also the design of the slits can be used to choose the magnetic properties of the valve member.

As set out above, in accordance with some embodiments the top and/or bottom plate of the valve member 49 is given a design different from the other plates. The top and bottom plates can be made thicker and can also be made of another material than the other plates in the valve member to serve as wear out plates. Also the plates 95 and 96 can increase the stability of the valve member 49, which can facilitate and allow for robust handling of the valve member 49.

In accordance with one embodiment the plates 91 of the valve member are secured, as set out above, by means of a bolted joint. In particular there is one bolted joint provided at a central section in all plates that keeps the valve member together as a single unit that can move in the space between the valve seat and the core. Other methods of securing the individual plates of the valve member can be envisaged. For example the stacked package of plates forming the valve member can be clamped or glued together. Regardless of the method used it is typically advantageous to use a securing that allows for a displacement between individual plates of the valve member, at least at some section(s) of the valve member. Thus, the plates can then, at least partly, be displaced in relation to each other in at least one direction such as a radial direction. In accordance with one embodiment the plates are secured to each other at a central location, and can be displaced in relation to each other in a radial direction of the plates at the outer sections of the plates. This allows, outside said securing location, for a small, essentially radial movement in terms of sliding between the individual plates of the valve member, when attracted by the core during the excitation phase, respectively returned by the inherent spring force of the valve member during the de-excitation phase. The movement, for example a radial movement, between the individual plates of the valve member will further contribute to a dampening of the movement of the valve member in the space where it can move between two positions corresponding to an open and a closed position of the valve.

The valve 31 can have other designs using a valve member 49 as described herein. Generally, the valve member 49 is arranged in a space in the valve and moves between two positions in response to a magnetic field generated by an electromagnet. The two positions correspond to an open and a closed state of the valve.

In Fig. 7a, another embodiment of the valve 31 is depicted. For ease of understanding only some parts of the valve 31 is depicted in Fig. 7. The valve comprises in a housing (not shown) a core 43. The core 43 can be generally U shaped. The core 43 can be magnetized by a coil 45. The coil 45 can, preferably, be wound around one leg of a U-shaped core. The valve 31 further comprises a valve member 49. The valve member 49 is in one end section attached to the core 43. In case of a U-shaped core the valve member 49 can be attached to an end section of the U-shaped core. Another end section of the valve member 49 can be freely arranged in a space between a valve seat (not shown) and the core 43. In particular the other end section can be provided in close connection to the other end section of a U-shaped core. When the core is magnetized the valve member 49 cooperates with the core to move the valve member between two positions (open and closed). One position when the valve member is attracted by the core 43, and another position where the core 43 is not magnetized and the valve member returns to an initial position using the built-up spring force of the valve member. The valve member 49 can further have an outer end section with a lip 29. The lip can be provided to work in conjunction with an inlet/outlet (not shown) of the valve 31. When the valve member moves between its two positions in response to an excitation current provided to the coil 45, the lip 29 acts to open/close the inlet/outlet from the valve 31.

In Fig. 7b the valve member 49 of Fig. 7a is shown in more detail, in exploded view as well as in assembled form. The valve member 49 is formed by a number of stacked plates 51. The plates can have a generally rectangular shape. In one section the plates are secured to each other. In one embodiment the plates are secured in an end section. The plates can be secured by means of a bolted joint 52. In one embodiment the stacked plates are bolted directly to the core 43. In another section, where the stacked plates are not secured to each other, the plates can be displaced in relation to each other in at least one direction. In accordance with one embodiment the valve member 49 has a clamp 53, for restricting, but not entirely preventing displacement of the individual plates in relation to each other in the another section. In accordance with one embodiment the bolted joint 52 is provided in one end section of stacked rectangular plates and the clamp 53 is provided in the other end section with the stacked rectangular plates. The clamp 53 can further be adapted to cooperate with an inlet/outlet to close/open the inlet outlet when the valve member moves between two positions as a result of the switched magnetisation of the core. The clamp 53 can be provided with a sealing element for providing a good seal when closing an inlet/outlet.

It is to be understood that features described in conjunction with a particular embodiment is not restricted to that particular embodiment. To the contrary, the embodiments serve as illustration of different design options only. It is possible to combine features from different embodiments. For example, the valve member 49 in Fig. 7b can have outer plates of other dimensions or by other materials etc.

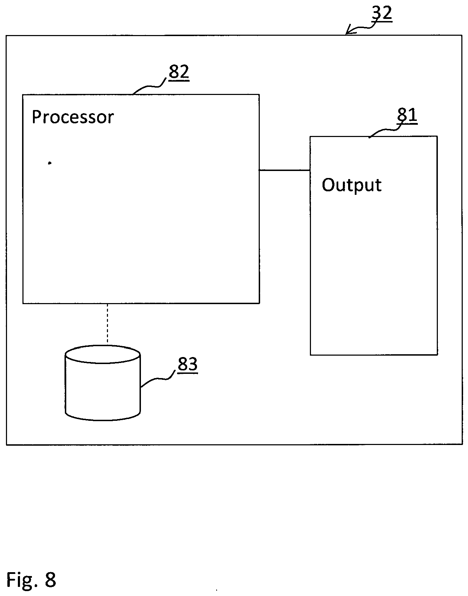

In Fig. 8 a controller 32 for controlling a valve 31 is depicted. The controller 32 can comprise an output 81 for outputting an electrical current to the electromagnetic valve 31. The controller 32 further comprises a micro-processor that also can be referred to a processing unit 82. The processing unit 82 is connected to and can execute computer program instructions stored in a memory 83. The memory 83 can also store content that can be accessed by the processing unit 82. The computer program instructions can be programmed to open the valve at suitable times.

Using the air-jet weaving machine and the air supply arrangement as set out herein can provide a more efficient use of energy in an air jet weaving machine.

The provision of an air jet weaving machine in accordance with the above can significantly reduce the energy consumption for operating the air jet weaving machine. In particular by providing a plate stack assembly structure having magnetic properties in the valve controlling the compressed air supply as described herein, in one and the same element it is possible
- to achieve an appropriate magnet flow geometry and strength due to the aggregate large cross-sectional area of all the multiple plates in the stack assembly, by which fact a strong and fast forward movement of said element (opening/closing, or vice versa, of the valve) during the excitation phase can be achieved, and
- at the same time, to achieve an advantageously appropriate spring characteristics in the stack assembly, due to the multiplicity of the thin (and flexible) plates in the stack assembly and their at least partial movability in relation to each other, by which fact an advantageously strong and fast return movement of said element (closing/opening, or vice versa, of the valve) during the de-excitation phase can be achieved.

These features will result in a compressed air supply arrangement that can open and close the valve(s) controlling the compressed air-supply with reduced losses of energy. It is advantageous to provide the valves close to or even integrated with the air nozzles since this will further reduce the loss of compressed air.

## Claims

1. An air supply arrangement (30) for supply of compressed air to an air jet nozzle (35) in an air jet weaving machine (1), the air supply arrangement (30) comprising a compressed air supply unit (34) adapted to supply compressed air to the air jet nozzle (35), the air supply arrangement (30) further comprising a valve (31) interconnected between the air supply unit (34) and the air jet nozzle (35), **characterized in that** the valve (31) comprises a core (43) that can be magnetized using a coil (45) fed with an excitation current, the valve (31) further comprising a valve member (49) being made at least partly of a magnetic material, said valve member (49) being formed by at least three stacked plates (51, 91), said plates being at least partially displaceable in relation to each other in at least one direction and having a thickness of 0.02 - 0.5 mm, the valve member (49) being located in a space interconnecting an inlet and outlet of the valve, wherein the valve member can move in the space between two positions; a first position when there is no excitation current in the coil (45), and a second position where there is an excitation current in the coil (45) and where the valve member (49) is attracted by the core (43) and wherein in one of the two positions the valve member (49) is forced to close and in the other position to open a compressed air flow passage formed in the space between the inlet and outlet of the valve (31) and leading further to the air-jet nozzle (35).

2. The air supply arrangement (30) according to claim 1, wherein the plates have a diameter of 10 mm - 50 mm.

3. The air supply arrangement (30) according to any of claims 1 - 2, wherein the valve member has a weight of less than 10 grams.

4. The air supply arrangement (30) according to any of claims 1 - 3, wherein the top and/or bottom plate (95, 96) is made of another material than the other plates (91).

5. The air supply arrangement (30) according to any of claims 1 - 4, wherein the top and/or bottom plate (95, 96) is given another shape than the other plates (91).

6. An air jet weaving machine (1) comprising an air supply arrangement (30) for supply of compressed air to an air jet nozzle (35) in an air jet weaving machine (1) according to any of claims 1 - 5.

## Patentansprüche

1. Luftzuführanordnung (30) zur Zufuhr von Druckluft zu einer Luftstrahldüse (35) in einer Luftdüsenwebmaschine (1), wobei die Luftzuführanordnung (30) eine Druckluftzuführeinheit (34) umfasst, die dazu geeignet ist, der Luftstrahldüse (35) Druckluft zuzuführen, wobei die Luftzuführanordnung (30) weiter ein Ventil (31) umfasst, das zwischen der Luftzuführeinheit (34) und der Luftstrahldüse (35) eingebunden ist, **dadurch gekennzeichnet, dass** das Ventil (31) einen Kern (43) umfasst, der unter Verwendung einer mit einem Erregerstrom gespeist Spule (45) magnetisiert werden kann, wobei das Ventil (31) weiter ein Ventilglied (49) umfasst, das mindestens teilweise aus einem magnetischen Material gefertigt ist, wobei das Ventilglied (49) von mindestens drei gestapelten Platten (51, 91) gebildet wird, wobei die Platten mindestens teilweise in Bezug zueinander in mindestens eine Richtung verschiebbar sind und eine Dicke von 0,02 - 0,5 mm aufweisen, wobei das Ventilglied (49) in einem Raum untergebracht ist, der einen Einlass und Auslass des Ventils miteinander verbindet, wobei sich das Ventilglied in dem Raum zwischen zwei Stellungen bewegen kann; einer ersten Stellung, in der kein Erregerstrom in der Spule (45) anliegt, und einer zweiten Stellung, in der ein Erregerstrom in der Spule (45) anliegt und in der das Ventilglied (49) vom Kern (43) angezogen wird, und wobei in einer der zwei Stellungen das Ventilglied (49) dazu gezwungen wird, einen Druckluftströmungsdurchgang, der in dem Raum zwischen dem Einlass und Auslass des Ventils (31) gebildet ist und weiter zur Luftstrahldüse (35) führt, zu schließen, und in der anderen Stellung dazu, ihn zu öffnen.

2. Luftzuführanordnung (30) nach Anspruch 1, wobei die Platten einen Durchmesser von 10 mm - 50 mm aufweisen.

3. Luftzuführanordnung (30) nach einem der Ansprüche 1 - 2, wobei das Ventilglied ein Gewicht von weniger als 10 Gramm aufweist.

4. Luftzuführanordnung (30) nach einem der Ansprüche 1 - 3, wobei die Deck- und/oder Bodenplatte (95, 96) aus einem anderen Material gefertigt ist als die anderen Platten (91).

5. Luftzuführanordnung (30) nach einem der Ansprüche 1 - 4, wobei der Deck- und/oder Bodenplatte (95, 96) eine andere Form gegeben ist als den anderen Platten (91).

6. Luftdüsenwebmaschine (1), die eine Luftzuführanordnung (30) zur Zufuhr von Druckluft zu einer Luftstrahldüse (35) in einer Luftdüsenwebmaschine (1) nach einem der Ansprüche 1 - 5 umfasst.

## Revendications

1. Agencement de fourniture d'air (30) pour fournir de l'air comprimé à une buse à jet d'air (35) dans une machine à tisser à jet d'air (1), l'agencement de fourniture d'air (30) comprenant une unité de fourniture d'air comprimé (34) adaptée pour fournir de l'air comprimé à la buse à jet d'air (35), l'agencement de fourniture d'air (30) comprenant en outre une soupape (31) reliée entre l'unité de fourniture d'air (34) et la buse à jet d'air (35), **caractérisé en ce que** la soupape (31) comprend un noyau (43) qui peut être magnétisé en utilisant une bobine (45) alimentée en courant d'excitation, la soupape (31) comprenant en outre un élément soupape (49) étant au moins partiellement composé d'un matériau magnétique, ledit élément soupape (49) étant formé par au moins trois plaques empilées (51, 91), lesdites plaques pouvant au moins partiellement être déplacées les unes par rapport aux autres dans au moins une direction et ayant une épaisseur de 0,02 à 0,5 mm, l'élément soupape (49) étant situé dans un espace reliant une entrée et une sortie de la soupape, dans lequel l'élément soupape peut se déplacer dans l'espace entre deux positions ; une première position lorsqu'un courant d'excitation est absent dans la bobine (45), et une seconde position où un courant d'excitation est présent dans la bobine (45) et où l'élément soupape (49) est attiré par le noyau (43) et dans lequel dans l'une des deux positions l'élément soupape (49) est forcé à fermer, et dans l'autre position à ouvrir, un passage d'écoulement d'air comprimé formé dans l'espace entre l'entrée et la sortie de la soupape (31) et menant en outre vers la buse à jet d'air (35).

2. Agencement de fourniture d'air (30) selon la revendication 1, dans lequel les plaques ont un diamètre de 10 mm à 50 mm.

3. Agencement de fourniture d'air (30) selon l'une quelconque des revendications 1 et 2, dans lequel l'élément soupape a un poids inférieur à 10 grammes.

4. Agencement de fourniture d'air (30) selon l'une quelconque des revendications 1 à 3, dans lequel la plaque supérieure et/ou inférieure (95, 96) est composée d'un matériau différent de celui des autres plaques (91).

5. Agencement de fourniture d'air (30) selon l'une quelconque des revendications 1 à 4, dans lequel la plaque supérieure et/ou inférieure (95, 96) se présente sous une forme différente de celle des autres plaques (91).

6. Machine à tisser à jet d'air (1) comprenant un agencement de fourniture d'air (30) pour fournir de l'air comprimé à une buse à jet d'air (35) dans une machine à tisser à jet d'air (1) selon l'une quelconque des revendications 1 à 5.
